# EUROPEAN PATENT SPECIFICATION

(11) **EP 3 397 813 B1**
(45) Date of publication and mention of the grant of the patent: **18.09.2019**
(21) Application number: 16825413.4
(22) Date of filing: 22.12.2016
(51) Int. Cl.: E01C 13/08, D01D 5/253, D01D 5/42, B29C 48/05, B29C 48/08, B29C 48/10, B29C 48/12, B29C 48/30, B29C 48/00, B29C 48/305, B29C 71/02, D06N 7/00

(54) **ARTIFICIAL TURF MONOFILAMENTS AND METHODS FOR THEIR MANUFACTURE**
KUNSTRASENDRAHT UND VERFAHREN ZU DEREN HERSTELLUNG
MONOFILAMENTS DE GAZON ARTIFICIEL ET PROCÉDÉS POUR LEUR FABRICATION

(30) Priority: 28.12.2015 EP 15202837
(43) Date of publication of application: 07.11.2018
(73) Proprietor: Beaulieu International Group NV, 8790 Waregem (BE)
(72) Inventor: BEAUPREZ, Mathijs (Marc), 9040 Sint-Amandsberg (BE); DE RUDDER, Kjell, 9320 Erembodegem (BE)
(74) Representative: De Clercq & Partners
(86) International application number: PCT/EP2016/082321
(87) International publication number: WO 2017/114734

(56) References cited:
- US-A- 3 832 272
- US-A1- 2012 114 942
- US-A1- 2013 004 683

## Description

### FIELD OF THE INVENTION

The invention relates to artificial turf monofilaments, methods for manufacturing said artificial turf monofilaments, and an artificial turf system comprising said artificial turf monofilaments. The present invention particularly relates to artificial grass which resembles real grass.

### BACKGROUND OF THE INVENTION

Artificial turf systems are increasingly used in many applications. One of the important criteria of artificial turf systems, like artificial grass, is the resemblance to real grass. It remains however a challenge to provide an artificial grass that does not look "artificial".

Current artificial turf systems suffer from a number of drawbacks. Artificial turf systems are typically made of a backing layer having a plurality of strands tufted through. To keep manufacturing costs low and production output high, the strands may be produced as tapes of thermoplastic material that are cut out of a foil. A disadvantage of these tapes is their "artificial" look since they typically have a uniform, flat shape.

Another way of producing said strands is by directly extruding monofilaments. Monofilaments have better properties than tapes since monofilaments may be made having any shape opposed to the rectangular shape of tapes. However the shape of the monofilaments does not change along the length of the monofilaments. This again results in an "artificial" look of the artificial turf system.

US 3,594,870 describes an apparatus adapted for production of multifile filaments of thermoplastic polymers by extrusion of a foil or web which is longitudinally ribbed to provide longitudinally extending breaking or tearing lines or zones with filament-forming ribbons or strips of polygonal cross section. The foil is hereby split up into continuous uniform separate strands and/or filaments. In order that the foil web breaks up with certainty in the preferential breaking zones, it is important for the web to have a shape that assists the effectiveness of the operation. The individual shapes or profiles are interconnected in those preferential breaking regions. A disadvantage of these multifile filaments is again their uniform "artificial" look.

US2012/114942A1 describes a fiber/filament for use in an artificial grass field. In view of the above, it is an object of the present invention to overcome the recited challenges and thus to improve the look and feel of artificial turf systems such that they better resemble real grass.

### SUMMARY OF THE INVENTION

The present invention addresses these challenges by providing artificial turf monofilaments as defined in claim 1 having the features of claim 1. Surprisingly, this method results in non-uniform strands that do not look artificial and very closely resemble real grass. Unlike the breaking or tearing zones from the prior art, the cutting zones are random within the non-planar shape, as such providing differently shaped individual monofilaments.

In some preferred embodiments, said non-planar shape has a repeating pattern. In some preferred embodiments, said non-planar shape has an irregular pattern. In some preferred embodiments, the surface of the monofilaments is textured. In some preferred embodiments, the texture comprises elongated ridges and/or valleys.

In a further aspect, the present invention provides a method for manufacturing artificial turf monofilaments having the features of claim 6.

In a further aspect, the present invention provides a method for manufacturing artificial turf monofilaments having the features of claim 7.

In some preferred embodiments, the profiled die has a micro profiled or textured surface. In some preferred embodiments, the profiled roll has a micro profiled or textured surface. In some preferred embodiments, said cutting is performed using at least one knife beam comprising a plurality of knives, wherein the knives are spaced apart at a regular or at a variable distance. In some preferred embodiments, one or more knives are allowed to vibrate. In some preferred embodiments, said knife beam is moved in a direction perpendicular to the direction of the foil.

Preferably, the methods provided herein are used for producing the artificial turf monofilaments provided herein.

In a further aspect, the present invention provides a bobbin of artificial turf monofilaments provided herein, or a bobbin of artificial turf monofilaments manufactured according to the method provided herein.

In a further aspect, the present invention provides an artificial turf system comprising artificial turf piles and/or tufts attached to a backing wherein said piles and/or tufts comprise artificial turf monofilaments provided herein, or artificial turf monofilaments manufactured according to a method provided herein. In some preferred embodiments, said piles and/or tufts each have a different cross-section.

The above and further aspects and preferred embodiments of the invention are described in the following sections and in the appended claims. The subject-matter of appended claims is hereby specifically incorporated in this specification.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.

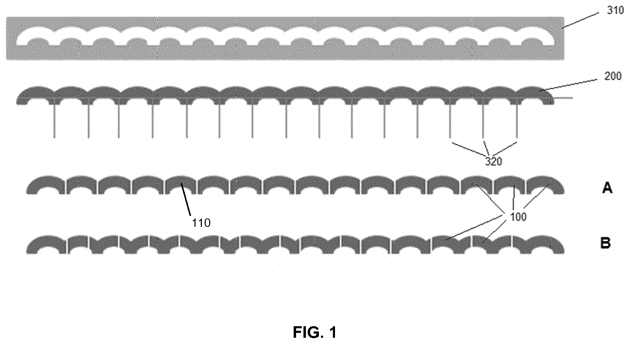

**Figure 1** shows a profiled die (310) for extruding a thermoplastic foil (200) having a non-planar shape and monofilaments (100) cut from said foil.

Throughout the figures, the following numbering is adhered to: 100 - monofilaments; 200 - thermoplastic foil; 310 - profiled die; 320 - knives; 110 - cross-section of monofilament.

### DETAILED DESCRIPTION

In a first aspect, the present invention relates to artificial turf having the features of claim 1.

The term "length" as used herein refers to the longest dimension of the monofilament, and typically corresponds to the direction along which the thermoplastic foil was extruded. Before cutting, the length of monofilaments is typically up to several kilometers, for example up to 2 to 6 km. After cutting, e.g. as tufted in an artificial turf system, the length of monofilaments is typically from 0.3 cm to 10.0 cm, and generally up to 6.0 cm.

The term "width of the thermoplastic foil" as used herein refers to the longest dimension of the thermoplastic foil that is perpendicular to the length. In some embodiments, the width of the thermoplastic foil prior to cutting is from 0.20 m to 2.00 m, generally from 0.80 m to 1.20 m.

The term "width of the monofilaments" as used herein refers to the longest dimension of the monofilaments that is perpendicular to the length. In some embodiments, the width of the monofilaments is from 1.0 mm to 5.0 mm. These dimensions are provided after stretching the monofilaments (i.e. after step d of the method detailed below).

The term "thickness" as used herein refers to the longest dimension of the thermoplastic foil that is perpendicular to the length and perpendicular to the width. In some embodiments, the thickness of the monofilaments is from 50 micron to 500 micron. These dimensions are provided after stretching the monofilaments (i.e. after step d. or step v. of the method detailed below).

In some embodiments, the thickness of the monofilaments is from 50 micron to 500 micron, and the width of the monofilaments is from 1.0 mm to 5.0 mm.

The term "cross-section along their length" as used herein refers to the cross-section perpendicular to the length. The cross-section of the monofilament varies irregularly along the length of the monofilament.

The term "non-planar" as used herein refers to a shape of the thermoplastic foil that is essentially not planar. The thermoplastic foil has a cross-section which is not linear or flat. The general shape of the cross-section is also referred to as the "macro profile". For example, the thermoplastic foil may be indented. The monofilaments are cut from the non-planar shaped thermoplastic foil in such a manner that their cross-section is irregularly-shaped.

In some embodiments, the non-planar shape of said thermoplastic foil has a repeating pattern. The term "repeating pattern" as used herein refers to a base shape connected to each other in a repeating way. The base shape is neither planar nor flat.

In some embodiments, the repeating pattern is a C-shaped pattern, whereby the C's are connected to each other by their ends. The particular shape of the repeating pattern is not critical. Some repeating patterns include omega-, v-, cross-, three-legged-star-shaped, and diamond-shaped repeating patterns. Many more are possible.

In some embodiments, the non-planar shape of said thermoplastic foil has an irregular pattern. The term "irregular pattern" as used herein refers to said thermoplastic foil having a non-repeating pattern or a random shape provided that it is not planar.

In some embodiments, the non-planar shape of said thermoplastic foil comprises a combination of repeating and irregular patterns.

In some embodiments, the surface of the monofilaments is textured. More specifically, the texture may comprise elongated ridges and/or valleys. Such surface texture may enhance the resiliency of the monofilaments. In addition, said texture may influence light scattering by the monofilaments, which may provide a matte, more natural look. Furthermore, said surface texture may be used to simulate the look and feel of natural leaf veins. The cross section of the surface texture is herein also referred to as a "micro profile".

In a further aspect, the present invention provides a method for manufacturing artificial turf monofilaments having the features of claim 6.

Accordingly, monofilaments provided herein may be manufactured in a particularly efficient way. More specifically, the stretching step d. increases the yield strength of the fibres, and the annealing step allows avoiding fibre shrinkage.

In some embodiments, the non-planar shape of the profiled die has a repeating pattern. In some embodiments, the non-planar shape of the profiled die has an irregular pattern.

In a specific embodiment, the profiled die, herein also referred to as "extruder die", has a macro profile adapted to the non-planar shape, compared to a flat or slightly profiled die having a micro profile.

In some embodiments, the profiled die has a micro profile or texture. That is, the profiled die has both a macro profile to provide extruded foils a non-planar shape, and a further micro profile or texture. In particular, the micro profile or texture of the profiled die determines the texture of the monofilaments. The texture of the profiled die may comprise elongated ridges and/or valleys. Accordingly, respectively valleys and/or ridges may be imprinted on extruded monofilaments. As discussed before, such surface texture may enhance the resiliency of the monofilaments, especially with respect to bending loads. In addition, said texture may influence light scattering by the monofilaments, which may provide a matte, more natural look. Furthermore, said surface texture may be used to simulate the look and feel of natural leaf veins.

In a further aspect, the present invention provides a method for manufacturing artificial turf monofilaments having the features of claim 7.

Accordingly, monofilaments provided herein may be manufactured in a particularly efficient way. More specifically, the stretching step iv. increases the yield strength of the fibres, and the annealing step allows avoiding fibre shrinkage.

In some embodiments, the profiled roll has a repeating pattern. In some embodiments, the profiled roll has an irregular pattern.

In some embodiments, the profiled roll has a micro profile or texture. That is, the profiled roll has both a macro profile to provide extruded foils a non-planar shape, and a further micro profile or texture. In particular, the micro profile or texture of the profiled roll determines the texture of the monofilaments. The texture of the profiled roll may comprise elongated ridges and/or valleys. Accordingly, respectively valleys and/or ridges may be transferred on extruded monofilaments.

In some embodiments, an extruder die used to extrude the thermoplastic foil in step i. may have a micro profile producing a planar foil; the non-planar shape is then applied to the thermoplastic foil by using a macro profiled roll or equivalent. The step of moving said thermoplastic foil over a profiled roll and the cooling step is preferably one and the same, for example by moving said thermoplastic foil over a cooling, profiled roll.

The cutting step in both of the methods as recited above might theoretically, in case of a repeating base-shape foil pattern, result in monofilaments having a perfect base-shaped cross-section, that is if the cutting lines were exactly on the edges of two adjoining base-shapes. This is illustrated in **Figure 1A**. However, in reality, the cutting is not performed exactly on these edges, resulting in monofilaments having an irregularly-shaped cross-section. This is illustrated in **Figure 1B**. The cross-section may have any shape ranging from a base-shape to a part of within any of two base-shapes. As such, each monofilament will have a different cross-section. Also, each monofilament will have different properties such as thermal deformation, resistance to bending, discolouring during stretching, etc.

In some embodiments of a method for manufacturing artificial turf monofilaments, said cutting is performed using at least one knife beam comprising a plurality of knives, wherein the knives are spaced apart at a regular or at a variable distance. In some embodiments, one or more knives are allowed to vibrate. This may enhance the irregularity of the monofilaments. In some embodiments, two or more knife beams may be used for the cutting, for example two or more alternating knife beams.

In some embodiments of a method for manufacturing artificial turf monofilaments, said knife beam is moved in a direction perpendicular to the direction of the foil. As used herein, the direction of the foil corresponds to the direction along which the foil was extruded, or the direction along which the foil was moved over a profiled roll. The movement of the knife beam may comprise an oscillation, or may comprise movement in a controlled or random pace, for example from left to right and back, when viewed along the direction of the foil.

In some embodiments, the knife beam is static. By the mere fact that the foil is moving and due to its irregular shape, the foil itself creates slight errors in cutting, resulting in the variations in shape in the cut monofilaments.

Through the action of blade movement and/or foil movement, the width of the cut monofilaments typically varies along their length. Preferably, the variations in the width of the cut monofilaments are less than, or equal to the width of the cut monofilaments.

Accordingly, the present invention comprises one of the methods as recited earlier for manufacturing the artificial turf monofilaments as recited earlier.

In a further aspect, the present invention comprises a bobbin of artificial turf monofilaments as recited earlier, or a bobbin of artificial turf monofilaments manufactured according to one of the methods as recited earlier. Preferably, said artificial turf monofilaments are wound on the bobbin. The bobbin typically comprises up to 12 monofilaments.

In a further aspect, the present invention comprises an artificial turf system comprising artificial turf piles and/or tufts attached to a backing using conventional processing techniques well known to the person skilled in the art, wherein said piles and/or tufts comprise artificial turf monofilaments as recited earlier, or artificial turf monofilaments manufactured according to one of the methods as recited earlier.

In some embodiments of an artificial turf system, said piles and/or tufts each have a different cross-section. Because the individual monofilaments mainly have a different cross-section, the artificial turf system provides improved resemblance to real turf.

Aspects of the present invention and/or any embodiments thereof may be combined with any other aspect of the present invention and/or any embodiments thereof.

### EXAMPLES

### Example1

The present example discloses, referring to **Figure 1**, a profiled die (310) having a non-planar shape for extruding a thermoplastic foil (200) having said non-planar shape. The thermoplastic foil (200) is cut lengthwise into monofilaments (100) having an irregularly-shaped cross-section (110) along their length. Cutting is performed using a knife beam comprising a plurality of knives (320), wherein the knives (320) are spaced apart at a regular distance. Theoretically, as shown in **Figure 1A**, the monofilaments would have the same shape, but in reality, as shown in **Figure 1B**, the monofilaments each have a different shape.

## Claims

1. Artificial turf monofilaments (100), said monofilaments (100) each comprising an irregularly-shaped cross-section (110) perpendicular to the length of the artificial turf monofilament (100) that varies irregularly along the length of the monofilament, wherein said monofilaments (100) are cut from a thermoplastic foil (200) having a non-planar shape.

2. Artificial turf monofilaments (100) according to claim 1, wherein said non-planar shape has a repeating pattern.

3. Artificial turf monofilaments (100) according to claim 1 or 2, wherein said non-planar shape has an irregular pattern, the irregular pattern of the thermoplastic foil (200) being a non-repeating pattern or a random shape that is not planar.

4. Artificial turf monofilaments (100) according to any one of claims 1 to 3, wherein the surface of the monofilaments (100) is textured.

5. Artificial turf monofilaments (100) according to claim 4, wherein the texture comprises elongated ridges and/or valleys.

6. A method for manufacturing artificial turf monofilaments (100), comprising the steps of:
- extruding a thermoplastic foil (200) through a profiled die (310), thereby applying a non-planar shape;
- cooling said thermoplastic foil (200);
- cutting said thermoplastic foil (200) lengthwise into monofilaments (100) each comprising an irregularly-shaped cross-section (110) perpendicular to the length of the artificial turf monofilament (100) that varies irregularly along the length of the monofilament;
- stretching said monofilaments (100); and,
- annealing said monofilaments (100).

7. A method for manufacturing artificial turf monofilaments (100), comprising the steps of:
- extruding a thermoplastic foil (200);
- moving said thermoplastic foil (200) over a cooling, profiled roll, thereby applying a non-planar shape;
- cutting said thermoplastic foil (200) lengthwise into monofilaments (100) each comprising an irregularly-shaped cross-section (110) perpendicular to the length of the artificial turf monofilament (100) that varies irregularly along the length of the monofilament;
- stretching said monofilaments (100); and,
- annealing said monofilaments (100).

8. Method according to claim 6 or 7, wherein the profiled die (310) has a micro profiled or textured surface, or wherein the profiled roll has a micro profiled or textured surface.

9. Method according to any one of claims 6 to 8, wherein said cutting is performed using at least one knife beam comprising a plurality of knives (320), wherein the knives (320) are spaced apart at a regular or at a variable distance.

10. Method according to claim 9, wherein one or more knives (320) are allowed to vibrate.

11. Method according to claim 9 or 10, wherein said knife beam is moved in a direction perpendicular to the direction of the foil.

12. Method according to any one of claims 6 to 11 for manufacturing the artificial turf monofilaments (100) of any one of claims 1 to 5.

13. A bobbin of artificial turf monofilaments (100) according to any one of claims 1 to 5, or a bobbin of artificial turf monofilaments (100) manufactured according to the method of any one of claims 6 to 12.

14. Artificial turf system comprising artificial turf piles and/or tufts attached to a backing wherein said piles and/or tufts comprise artificial turf monofilaments (100) according to any one of claims 1 to 5, or artificial turf monofilaments (100) manufactured according to the method of any one of claims 6 to 12.

15. Artificial turf system according to claim 14 wherein said piles and/or tufts each have a different cross-section (110).

## Patentansprüche

1. Kunstrasen-Monofilamente (100), wobei die Monofilamente (100) jeweils einen unregelmäßig geformten Querschnitt (110) umfassen, der zu der Länge des Kunstrasen-Monofilaments (100) senkrecht ist und entlang der Länge des Monofilaments unregelmäßig variiert, wobei die Monofilamente (100) aus einer thermoplastischen Folie (200) mit einer nicht-planaren Form geschnitten sind.

2. Kunstrasen-Monofilamente (100) nach Anspruch 1, wobei die nicht-planare Form ein sich wiederholendes Muster aufweist.

3. Kunstrasen-Monofilamente (100) nach Anspruch 1 oder 2, wobei die nicht-planare Form ein unregelmäßiges Muster aufweist, wobei das unregelmäßige Muster der thermoplastischen Folie (200) ein sich nicht wiederholendes Muster ist, oder eine statistische Form aufweist, die nicht planar ist.

4. Kunstrasen-Monofilamente (100) nach einem der Ansprüche 1 bis 3, wobei die Oberfläche der Monofilamente (100) texturiert ist.

5. Kunstrasen-Monofilamente (100) nach Anspruch 4, wobei die Textur längliche Kämme und/oder Täler umfasst.

6. Verfahren zur Fertigung von Kunstrasen-Monofilamenten (100), umfassend die Schritte:
- Extrudieren einer thermoplastischen Folie (200) durch eine Profildüse (310), wodurch eine nicht-planare Form appliziert wird;
- Kühlen der thermoplastischen Folie (200);
- Schneiden der thermoplastischen Folie (200) in Längsrichtung zu Monofilamenten (100), die jeweils einen unregelmäßig geformten Querschnitt (110) umfassen, der senkrecht zu der Länge des Kunstrasen-Monofilaments (100) ist und entlang der Länge des Monofilaments unregelmäßig variiert;
- Strecken der Monofilamente (100); und
- Tempern der Monofilamente (100).

7. Verfahren zur Fertigung von Kunstrasen-Monofilamenten (100), umfassend die Schritte:
- Extrudieren einer thermoplastischen Folie (200);
- Bewegen der thermoplastischen Folie (200) über eine kühlende Profilwalze, wodurch eine nicht-planare Form appliziert wird;
- Schneiden der thermoplastischen Folie (200) in Längsrichtung zu Monofilamenten (100), die jeweils einen unregelmäßig geformten Querschnitt (110) umfassen, der senkrecht zu der Länge des Kunstrasen-Monofilaments (100) ist und entlang der Länge des Monofilaments unregelmäßig variiert;
- Strecken der Monofilamente (100); und
- Tempern der Monofilamente (100).

8. Verfahren nach Anspruch 6 oder 7, wobei die Profildüse (310) eine mikroprofilierte oder texturierte Oberfläche aufweist, oder wobei die Profilwalze eine mikroprofilierte oder texturierte Oberfläche aufweist.

9. Verfahren nach einem der Ansprüche 6 bis 8, wobei das Schneiden unter Verwendung von mindestens einem Messerbalken durchgeführt wird, der eine Vielzahl von Messern (320) umfasst, wobei die Messer (320) in regelmäßigen oder variablen Abständen beabstandet sind.

10. Verfahren nach Anspruch 9, wobei ein oder mehrere Messer (320) vibrieren können.

11. Verfahren nach Anspruch 9 oder 10, wobei der Messerbalken in eine Richtung bewegt wird, die senkrecht zu der Richtung der Folie ist.

12. Verfahren nach einem der Ansprüche 6 bis 11 zum Fertigen der Kunstrasen-Monofilamente (100) gemäß einem der Ansprüche 1 bis 5.

13. Haspel mit Kunstrasen-Monofilamenten (100) nach einem der Ansprüche 1 bis 5, oder Haspel mit Kunstrasen-Monofilamenten (100), die nach dem Verfahren gemäß einem der Ansprüche 6 bis 12 gefertigt sind.

14. Kunstrasensystem, umfassend Kunstrasenflore und/oder Büschel, die an einer Unterlage befestigt sind, wobei die Flore und/oder Büschel Kunstrasen-Monofilamente (100) gemäß einem der Ansprüche 1 bis 5 oder Kunstrasen-Monofilamente (100) umfassen, die nach dem Verfahren gemäß einem der Ansprüche 6 bis 12 gefertigt sind.

15. Kunstrasensystem nach Anspruch 14, wobei die Flore und/oder Büschel jeweils einen unterschiedlichen Querschnitt (110) aufweisen.

## Revendications

1. Monofilaments de gazon artificiel (100), lesdits monofilaments (100) comprenant chacun une section transversale (110) de forme irrégulière perpendiculaire à la longueur du monofilament de gazon artificiel (100) qui varie irrégulièrement sur la longueur du monofilament, lesdits monofilaments (100) étant découpés dans une feuille thermoplastique (200) ayant une forme non plane.

2. Monofilaments de gazon artificiel (100) selon la revendication 1, ladite forme non plane ayant un motif répétitif.

3. Monofilaments de gazon artificiel (100) selon la revendication 1 ou 2, ladite forme non plane ayant un motif irrégulier, le motif irrégulier de la feuille thermoplastique (200) étant un motif non répétitif ou une forme aléatoire non plane.

4. Monofilaments de gazon artificiel (100) selon l'une quelconque des revendications 1 à 3, la surface des monofilaments (100) étant texturée.

5. Monofilaments de gazon artificiel (100) selon la revendication 4, la texture comprenant des crêtes et/ou des creux allongés.

6. Procédé pour fabriquer des monofilaments de gazon artificiel (100), comprenant les étapes consistant à :
- extruder une feuille thermoplastique (200) à travers une matrice profilée (310), en appliquant ainsi une forme non plane ;
- refroidir ladite feuille thermoplastique (200) ;
- découper ladite feuille thermoplastique (200) dans le sens de la longueur en monofilaments (100) comprenant chacun une section transversale (110) de forme irrégulière perpendiculaire à la longueur du monofilament de gazon artificiel (100) qui varie irrégulièrement sur la longueur du monofilament ;
- étirer lesdits monofilaments (100) ; et,
- recuire lesdits monofilaments (100).

7. Procédé pour fabriquer des monofilaments de gazon artificiel (100), comprenant les étapes consistant à :
- extruder une feuille thermoplastique (200) ;
- déplacer ladite feuille thermoplastique (200) sur un rouleau profilé refroidissant, en appliquant ainsi une forme non plane ;
- découper ladite feuille thermoplastique (200) dans le sens de la longueur en monofilaments (100) comprenant chacun une section transversale (110) de forme irrégulière perpendiculaire à la longueur du monofilament de gazon artificiel (100) qui varie irrégulièrement sur la longueur du monofilament ;
- étirer lesdits monofilaments (100) ; et,
- recuire lesdits monofilaments (100).

8. Procédé selon la revendication 6 ou 7, la matrice profilée (310) ayant une surface micro profilée ou texturée, ou le rouleau profilé ayant une surface micro profilée ou texturée.

9. Procédé selon l'une quelconque des revendications 6 à 8, ladite découpe étant effectuée à l'aide d'au moins un faisceau de couteaux comprenant une pluralité de couteaux (320), les couteaux (320) étant espacés à une distance régulière ou variable.

10. Procédé selon la revendication 9, au moins un couteau (320) pouvant vibrer.

11. Procédé selon la revendication 9 ou 10, ledit faisceau de couteaux étant déplacé dans une direction perpendiculaire à la direction de la feuille.

12. Procédé selon l'une quelconque des revendications 6 à 11 pour fabriquer les monofilaments de gazon artificiel (100) selon l'une quelconque des revendications 1 à 5.

13. Bobine de monofilaments de gazon artificiel (100) selon l'une quelconque des revendications 1 à 5, ou bobine de monofilaments de gazon artificiel (100) fabriqués selon le procédé selon l'une quelconque des revendications 6 à 12.

14. Système de gazon artificiel comprenant des poils et/ou des touffes de gazon artificiel fixés sur un support, lesdits poils et/ou touffes comprenant des monofilaments de gazon artificiel (100) selon l'une quelconque des revendications 1 à 5, ou des monofilaments de gazon artificiel (100) fabriqués selon le procédé selon l'une quelconque des revendications 6 à 12.

15. Système de gazon artificiel selon la revendication 14, lesdits poils et/ou touffes ayant chacun une section transversale (110) différente.
